Europäisches Patentamt

**European Patent Office**

Office européen des brevets

(11) Veröffentlichungsnummer: **0 263 476**
**A2**

# (12) EUROPÄISCHE PATENTANMELDUNG

(21) Anmeldenummer: **87114535.5**

(22) Anmeldetag: **05.10.87**

(51) Int. Cl.4: **B23Q 3/18**

(30) Priorität: **07.10.86 DE 3634118**

(43) Veröffentlichungstag der Anmeldung:
**13.04.88 Patentblatt 88/15**

(84) Benannte Vertragsstaaten:
**AT BE CH DE ES FR GB IT LI NL SE**

(71) Anmelder: **Issenmann, Karl-Heinz**
**Staufenstrasse 27**
**D-7730 VS-Schwenningen(DE)**

(72) Erfinder: **Issenmann, Karl-Heinz**
**Staufenstrasse 27**
**D-7730 VS-Schwenningen(DE)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**D-7730 VS-Villingen(DE)**

(54) **Verfahren zum Ausrichten einer Formplatte auf einem Werkzeugmaschinentisch und Ausrichtsegment zur Durchführung des Verfahrens.**

(57) Mittels in die Nuten (18') eines Werkzeugmaschinentischs (10') eingreifender Nutenführungsteile (24') und starr damit verbundener, in die genormten Systembohrungen (14) einer Normalien-Formplatte (12) eingreifender Zylinderteile (22') von Ausrichtsegmenten (20') kann eine außerordentlich schnelle und exakte Ausrichtung der Formplatte (12) auf dem Maschinentisch (10) erfolgen. Zwischen Nutenführungsteil (24') und Zylinderteil (22') kann ein Abstandshalter (28) eingefügt werden, wenn die Formplatte (12) in einem Abstand vom Werkzeugmaschinentisch (10) aufgespannt werden soll.

EP 0 263 476 A2

## Verfahren zum Ausrichten einer Formplatte auf einem Werkzeugmaschinentisch und Ausrichtsegment zur Durchführung des Verfahrens

Die Erfindung betrifft ein Verfahren nach dem Oberbegriff des Anspruchs 1 und ein Ausrichtsegment zur Durchführung dieses Verfahrens.

Ein Verfahren dieser Art ist aus dem DE-GM 73 14 053 bekannt. Dieses bekannte Verfahren dient zum Ausrichten von Werkstücken oder Spannvorrichtungen für Werkstücke auf einem Werkzeugmaschinentisch. Dabei werden in die Nuten des Werkzeugmaschinentisches einsetzbare Ausrichtsegmente mit einem nach oben stehenden Zylinderteil verwendet, und das Werkstück wird mit einer Stirnfläche an diese Zylinderteile angelegt. Dieses bekannte Ausrichtverfahren ist nicht mehr genau genug, wenn eine mit genormten Systembohrungen versehene Formplatte für Normalien auf einem Werkzeugmaschinentisch ausgerichtet werden soll. Zwar sind die Aufnahmebohrungen für die Gestellsäulen der Werkzeugmaschine, die sog. Systembohrungen der Formplatte, in Größe und Anordnung genau genormt. Es sind aber durch die Herstellung bedingte Ungenauigkeiten zwischen den Systembohrungen einerseits und den Stirnflächen der Formplatte unvermeidlich. Beim Ausrichten nach dem bekannten Verfahren müssen daher stets die Abstände zwischen Stirnfläche und Systembohrungen genauestens abgenommen und beim Festspannen der Formplatte auf dem Werkzeugmaschinentisch exakt berücksichtigt werden. Die Lage der Aufnahmebohrungen wird mit Hilfe von Meßinstrumenten genau aufgenommen und auf die Werkzeugspanneinrichtungen übertragen. Dies führt dazu, daß ein genau festgelegter Abstand zwischen einer Systembohrung und einem Ausrichtsegment beim Festlegen des entsprechenden Abstandes der nächsten Systembohrung zum zugehörigen Ausrichtsegment wieder leicht verfälscht wird, so daß mehrfach die Festspanneinrichtungen, beispielsweise Spannpratzen, Nutensteine oder dgl., wieder geöffnet und der Abstand nachgemessen bzw. nachgestellt werden muß. Dieser zeitraubende Vorgang beim Aufspannen von Formplatten muß bisher stets durchgeführt werden. Bei der Härtung einer solchen Formplatte durch Wärmebehandlung tritt abermals eine Verzerrung der Stirnflächen bezüglich der Systembohrungen ein, und es muß abermals dieses aufwendige Ausrichtverfahren durchgeführt werden. Da häufig Formplatten für Normalien unterschiedlicher Abmessungen auf dem Maschinentisch justiert werden müssen, ist der Zeitaufwand für Justage und Befestigung der Formplatten äußerst zeitaufwendung und daher störend.

Auch wenn die Formplatten nach dem bekannten Verfahren einmal auf dem Werkzeugmaschinentisch festgespannt sind, werden sie bei Bearbeitung, wie Fräsen oder dgl., trotz des Festspannens durch die Spanneinrichtungen häufig wieder etwas aus ihrer ausgerichteten Lage verrückt. Der Ausrichtvorgang muß dann nochmals wiederholt werden, oder es ergeben sich nicht zu tolerierenden Ungenauigkeiten.

Durch die Erfindung soll das Ausrichten einer Systembohrungen aufweisenden Formplatte auf einem Werkzeugmaschinentisch bei Erzielung höchster Genauigkeit wesentlich vereinfacht werden.

Diese Aufgabe wird bei einem Verfahren der eingangs genannten Art erfindungsgemäß durch die kennzeichnenden Merkmale des Anspruchs 1 gelöst.

Bei der Durchführung des erfindungsgemäßen Verfahrens müssen lediglich die Zylinderteile von mindestens zwei Ausrichtsegmenten in je eine Systembohrung der Formplatte und die zugehörigen Nutenführungsteile in eine gemeinsame Nut des Werkzeugmaschinentisches eingesetzt werden. Dadurch ist die Formplatte bereits mit ausreichender Genauigkeit fixiert. Eine Fixierung der übrigen Systembohrungen der Formplatte ist nicht erforderlich. Eine Formplatte mit genormten Systembohrungen kann somit innerhalb kürzester Zeit und ohne Aufwendung besonderer Sorgfalt fixiert werden.

Ein besonders wichtiger Vorteil des erfindungsgemäßen Verfahrens ist die Tatsache, daß nicht nur durch das Einsetzen der in der Nut verankerten Ausrichtsegmente in die Systembohrungen sehr schnell eine genaueste Ausrichtung der Formplatte erzielt wird, sondern darüber hinaus auch bei allen weiteren Bearbeitungen eine absolute Lagesicherung, insbesondere auch Drehsicherung der Formplatte gegeben ist, so daß die bisher häufig üblichen Nachstellungen zur Rückgewinnung einer genauen Ausrichtung vollständig entfallen.

Das erfindungsgemäße Verfahren ist grundsätzlich bei jeder Werkzeugmaschine einsetzbar. Es muß lediglich der Werkzeugmaschinentisch in Nutenausführung gefertigt sein. Dies ist praktisch bei allen Ausführungsformen von Werkzeugmaschinen der Fall.

Man hat versucht, das Ausrichten mittels des bekannten Verfahrens dadurch zu vereinfachen, daß man die als Ausrichtfläche verwendete Stirnfläche der Formplatte nach dem Härten nochmals nachgeschliffen hat. Abgesehen davon, daß auch durch dieses Nachschleifen die genauen Abstände zwischen Systembohrungen und Ausrichtfläche nicht exakt erzielt wurden, stellte das Nachschleifen einen erheblichen Arbeits-und Zeitaufwand dar. Dieser Arbeitsaufwand kann beim erfindungsgemäßen Verfahren entfallen.

Aus dem Buch von Erich Ziegener "Berechnung und Konstruktion von Vorrichtungen", VEB-Verlag Technik Berlin, 1954, Seiten 22 und 23, ist zwar bereits das Festlegen von Werkstücken in einer Auflageebene mittels zylindrischer Aufnahmebolzen bekannt, die in Boh rungen des Werkstücks eingesetzt werden. Die Ausrichtung der Werkstücke ist jedoch dabei verhältnismäßig ungenau. Ferner ist es aus der DE-AS 2 139 437 bekannt, einander zugeordnete Maschinenteile dadurch gegenseitig auszurichten, daß Teile eines gemeinsamen Bolzens in Bohrungen der beiden Maschinenteile eingesetzt werden, wobei durch Anziehen einer Spannschraube ein spielfreies Verspannen der beiden Maschinenteile möglich ist. Auch dieses Verfahren bezweckt in erster Linie das gegenseitige Festlegen und Verspannen, nicht aber ein genaues Ausrichten, wie es bei Formplatten mit Systembohrungen bezüglich eines Werkzeugmaschinentisches erforderlich ist.

Die Erfindung betrifft ferner ein Ausrichtsegment zur Durchführung des erfindungsgemäßen Verfahrens, mit einem Zylinderteil und einem Nutenführungsteil, das sich durch die kennzeichnenden Merkmale des Anspruchs 2 auszeichnet. Da die aufzuspannenden Formplatten außerordentlich schwer sind und daher das richtige Einführen des Nutenführungsteils in die zugehörige Nut nicht ohne weiteres beobachtet werden kann, muß ein Imbusschlüssel in die dafür vorgesehene Mehrkantöffnung des Zylinderteils von oben eingeführt und das Ausrichtsegment so lange gedreht werden, bis der Nutenführungsteil in die Nut einfallen kann.

Nicht nur die Systembohrungen, sondern auch die in diese einzuführenden Zylinderteile der Ausrichtsegmente müssen außerordentlich genau gearbeitet sein. Sie sitzen daher verhältnismäßig streng in den Systembohrungen und können, selbst wenn sie aus den Systembohrungen nach oben vorstehen würden, von Hand kaum gedreht werden. Wegen dieser erforderlichen Bearbeitungsgenauigkeit führt man aber natürlich die Zylinderteile möglichst wenig hoch aus, so daß ihre Höhe normalerweise gemäß An spruch 3 geringer ist als die teilweise erhebliche Dicke der Formplatten. Es kann daher eine Drehung der eingesetzten Zylinderteile nur mittels des in die Mehrkantöffnung eingesetzten Imbusschlüssels erfolgen.

Während das Einsetzen der Ausrichtsegmente in die Systembohrungen und die Nuten noch mittels der Mehrkantöffnung und des Imbusschlüssels erfolgen kann, gestaltet sich das Herausnehmen der Ausrichtsegmente noch schwieriger. Zu diesem Zweck kann gemäß Anspruch 4 eine Gewindebohrung vorgesehen werden, in die ein ein entsprechendes Außengewinde aufweisendes Zugwerkzeug von oben eingesetzt wird, so daß nach dem Festziehen des Zugwerkzeugs das Ausrichtsegment nach oben aus der Systembohrung herausgezogen werden kann.

In manchen Fällen ist es aus Bearbeitungsgründen erwünscht, daß zwischen dem Werkzeugmaschinentisch und der Formplatte ein Zwischenraum verbleibt. Zu diesem Zweck kann gemäß Anspruch 5 jedes Ausrichtsegment einen Abstandshalter aufweisen. Auf bisher verwendete sog. Abstandsleisten kann bei dieser Ausführungsform verzichtet werden. Bereits durch das Einsetzen der Ausrichtsegmente ist der richtige Abstand gewahrt. Allerdings müssen in diesem Falle auch in mindestens eine oder zwei weitere Systembohrungen Ausrichtsegmente mit Abstandshaltern eingesetzt werden. Jedoch ist es bei diesen zusätzlichen Ausrichtsegmenten nicht erforderlich, daß sie auch mit Nutenführungsteilen versehen sind, sondern bei ihnen können einfach die Abstandshalter auf dem Werkzeugmaschinentisch aufruhen (Anspruch 7).

Besonders einfach ist die Ausführungsform nach Anspruch 6 zu handhaben, da das Ausrichtsegment mit Zylinderteil und Nutenführungsteil trotz des lose darauf sitzenden Abstandshalters von oben in die Systembohrung eingesetzt und nach oben herausgezogen werden kann, während der Abstandshalterring zwischen Werkzeugmaschinentisch und Formplatte eingeklemmt bleibt. Auch das Drehen der Ausrichtsegmente beim Einsetzen läßt sich mit weniger Kraftaufwand ausführen, wenn sich der Abstandshalterring nicht mitdrehen muß und dabei eine große Reibungskraft zwischen demselben und der Formplatte andererseits entsteht.

Zur Anpassung an verschiedene Formen von Formplatte und Systembohrungen und an verschiedene Nutenformen kann gemäß Anspruch 8 der Nutenführungsteil auswechselbar im Zylinderteil befestigt werden. Es können dann sehr leicht unterschiedliche Nutenführungsteile und Zylinderteile miteinander kombiniert werden.

Der Nutenführungsteil wird bei einer vorteilhaften Weiterbildung nach Anspruch 9 in eine entsprechende Ausnehmung des Zylinderteils bzw. des Abstandshalters eingeschraubt.

Um insbesondere bei älteren Werkzeugmaschinen eine bessere Anpassung an Abweichungen der Nutenführung zu erreichen, kann gemäß Anspruch 10 die den Nutenführungsteil aufnehmende Ausnehmung leicht exzentrisch angeordnet sein, so daß Nutenabweichungen ohne weiteres durch leichtes Verdrehen des Zylinderteils ausgeglichen werden können.

Anhand der Figuren werden Ausführungsbeispiele der Erfindung näher erläutert. Es zeigt

Fig. 1 eine teilweise geschnittene bzw. weggebrochene Schrägansicht einer auf einem Werkzeugmaschinentisch ausgerichteten Formplatte mit einer ersten Ausführungsform der erfindungsgemäßen Ausrichtsegmente,

Fig. 2 eine der Fig. 1 entsprechende Schrägansicht mit einer zweiten Ausführungsform der erfindungsgemäßen Ausrichtsegmente,

Fig. 3 einen Teilschnitt längs der Linie III-III in Fig. 2,

Fig. 4 eine axiale Aufsicht auf ein Ausrichtsegment gemäß Fig. 3,

Fig. 5 eine Seitenansicht des bei der Ausführungsform gemäß Fig. 3 verwendeten Nutenführungsteils,

Fig. 6 eine axiale Untersicht des in Fig. 5 gezeigten Nutenführungsteils,

Fig. 7 eine Seitenansicht einer bei der Anordnung gemäß Fig. 2 verwendeten dritten Ausführungsform, bei der der Nutenführungsteil weggelassen ist,

Fig. 8 eine axiale Aufsicht auf die in Fig. 7 gezeigte Ausführungsform,

Fig. 9 einen Axialschnitt durch Zylinderteil und Abstandshalter einer vierten Ausführungsform des erfindungsgemäßen Ausrichtsegments, die im wesentlichen der in Fig. 3 dargestellten zweiten Ausführungsform entspricht, wobei jedoch die den Nutenführungsteil aufnehmende Ausnehmung des Abstandshalters exzentrisch zum Zylinderteil angeordnet ist,

Fig. 10 eine axiale Aufsicht auf die in Fig. 9 dargestellte Ausführungsform,

Fig. 11 einen der Fig. 3 entsprechenden Teilschnitt durch eine in Formplatte und Werkzeugmaschinentisch eingesetzte fünfte Ausführungsform des erfindungsgemäßen Ausrichtsegmentes und

Fig. 12 eine axiale Aufsicht auf die in Fig. 11 dargestellte Anordnung.

In allen Figuren sind gleiche oder gleichartige Teile mit den gleichen Bezugszeichen versehen.

Auf den allgemein mit 10 bezeichneten und nur teilweise dargestellten Maschinentisch einer im übrigen nicht dargestellten Werkzeugmaschine beliebiger Bauart ist eine Formplatte 12 mit genormten Systembohrungen 14 und 16 aufgesetzt. Der Maschinentisch 10 weist Nuten 18 üblicher Bauweise auf.

Erfindungsgemäß ist in die Systembohrungen 14 und eine Nut 18 je ein allgemein mit 20 bezeichnetes Ausrichtsegment gemäß der Erfindung eingesetzt. Das Ausrichtsegment 20 besteht aus einem satt in der Systembohrung 14 sitzenden Zylinderteil 22 und einem einstückig vom Zylinderteil 22 axial abstehenden Nutenführungsteil 24, der mit genauem Sitz gleitend in die Nut 18 eingreift. In eine auf der Oberseite des Zylinderteils 22 vorgesehene Mehrkantöffnung 26 kann ein Imbusschlüssel von oben her durch die Systembohrung 14 hindurch in den Zylinderteil 22 eingesetzt und dadurch das Ausrichtsegment in die richtige Lage verdreht werden.

Das Festspannen der auf diese Weise genau ausgerichteten Formplatte 12 auf dem Werkzeugmaschinentisch 10 kann mit beliebigen, nicht dargestellten Spannvorrichtungen, z.B. Spannpratzen, erfolgen, ohne die genaue Ausrichtung zu beeinträchtigen.

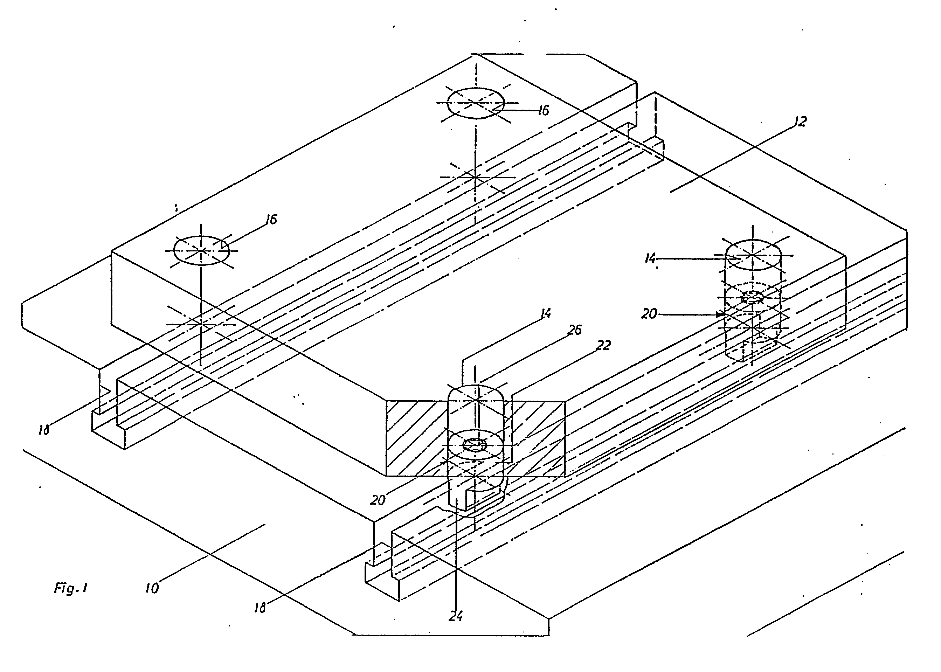

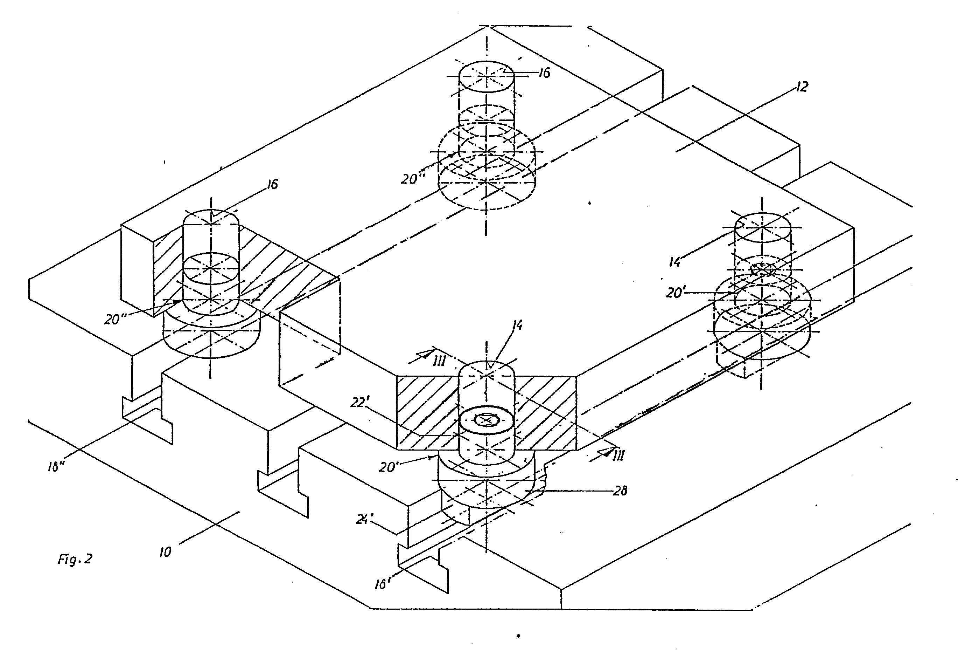

Bei der in Fig. 2 dargestellten Anordnung weist der Maschinentisch 10 Nuten 18' und 18'' auf. Die Formplatte 12 entspricht der in Fig. 1 dargestellten Formplatte. Die bei dieser Anordnung verwendete Ausführungsform der Ausrichtsegmente 20' weist außer dem Zylinderteil 22' einen damit einstückigen zylindrischen Abstandshalter 28 auf, dessen Durchmesser größer ist als der Durchmesser des Zylinderteils 22'. Am Abstandshalter 28 ist der weiter unten näher zu erläuternde Nutenführungsteil 24' befestigt, der in die Nut 18' eingreift.

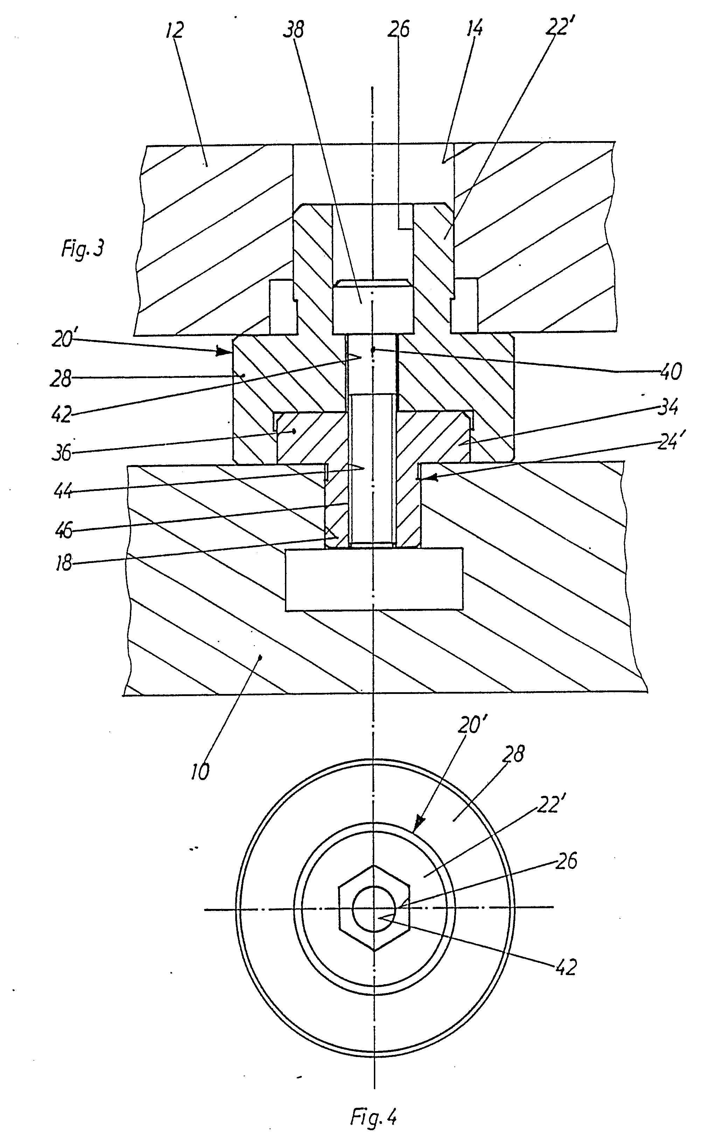

Wie aus Fig. 3 ersichtlich, ist der Zylinderteil 22' des Ausrichtsegments 20' in der Systembohrung 14 durch Einsetzen eines Imbusschlüssels von oben her in eine Mehrkantöffnung 26 betätigbar.

Durch den Abstandshalter 28 wird die Formplatte 12 in einem definierten Abstand vom Maschinentisch 10 gehalten. In eine zylindrische Ausnehmung 34 an der Unterseite des Abstandshalters 28 ist ein zylindrischer Einsatzteil 36 des Nutenführungsteils 24' bündig eingesetzt. Ein durch die Mehrkantöffnung 26 eingeführter und mittels eines Mehrkantkopfes 38 in dieser drehfest gehaltener Schraubenbolzen 40 ist durch eine anschließende Bohrung 42 des Abstandshalters 28 mittels eines Gewindes 44 in eine mit Innengewinde versehene Bohrung 46 des Nutenführungsteils 24' eingeschraubt. Damit bilden Zylinderteil 22' und Nutenführungsteil 24' eine mit dem Schraubbolzen 40 fest verbundene Einheit, nämlich das Ausrichtsegment 20', welches wie das Ausrichtsegment 20 der ersten Ausführungsform einerseits in die Formplatte 12 und andererseits in die Nuten 18' des Werkzeugmaschinentisches 10 einsetzbar ist.

Damit kann auch bei diesem Ausführungsbeispiel die genaue Ausrichtung der Formplatte 12 in der durch die Nut 18' vorgegebenen Richtung außerordentlich schnell und exakt erfolgen, wobei das Ausrichtsegment 20' durch Austauschen der Nutenführungsteile 24' unterschiedlichen Nutenabmessungen angepaßt werden kann.

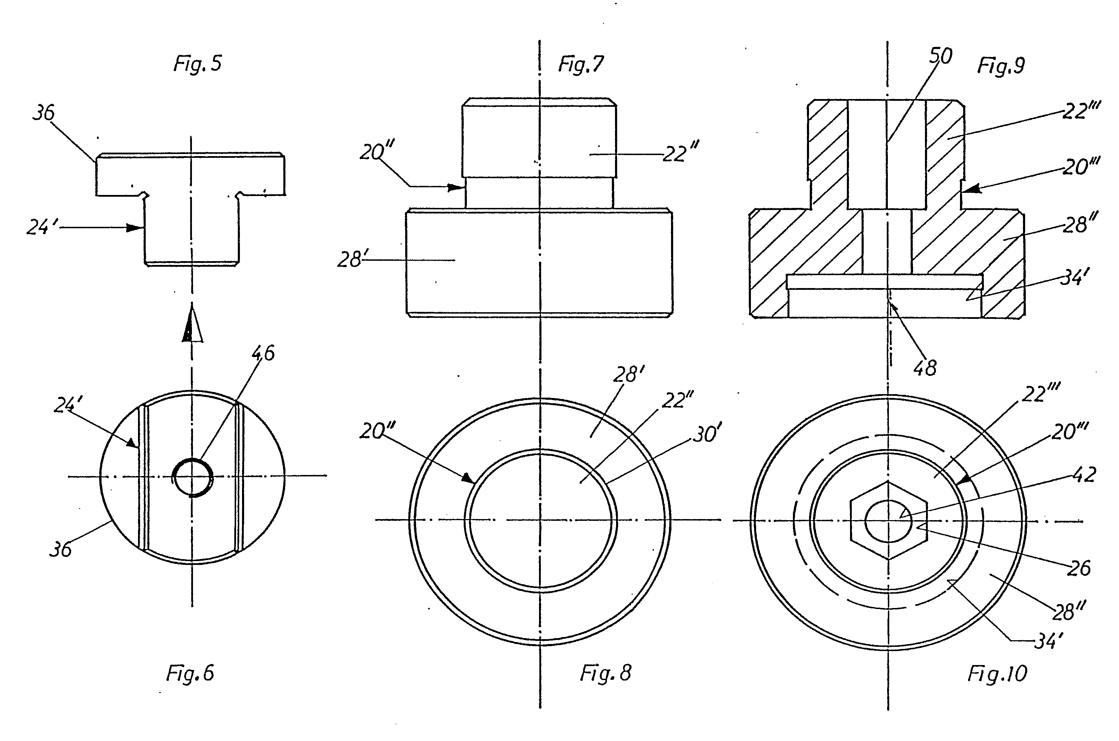

Eine Ausrichtung der rückwärtigen Systembohrungen 16 in der Nut 18" ist nicht erforderlich. In die Systembohrungen 16 werden lediglich von unten her Zylinderteile 22" einer allgemein mit 20" bezeichneten dritten Ausführungsform des erfindungsgemäßen Ausrichtsegments eingesetzt. Mit den Zylinderteilen 22" sind den Abstandshaltern 28 der zweiten Ausführungsform gemäß Fig. 3 entsprechende Abstandshalter 28' einstückig verbunden, die eine parallele Lage der Formplatte 12 bezüglich des Werkzeugmaschinentisches 10 gewährleisten. Die genaue Form der Ausrichtsegmente 20" ist aus den Fig. 7 und 8 ersichtlich.

Bei einer vierten Ausführungsform des erfindungsgemäßen Ausrichtsegments 20''' gemäß den Figuren 9 und 10, die im wesentlichen der Ausführungsform gemäß Fig. 3 entspricht, ist lediglich die Achse 48 der Ausnehmung 34' an der Unterseite des Abstandshalters 28" gegen die Achse 50 des zylindrischen Teils 22''' leicht exzentrisch versetzt. In die Ausnehmung 34' ist ein nicht dargestellter Einsatzteil eines entsprechenden Nutenführungsteils eingesetzt. Durch leichte Verdrehung des Zylinderteils 22''' können leichte Nutenabweichungen durch die damit verbundene seitliche Versetzung des Nutenführungsteils ausgeglichen werden.

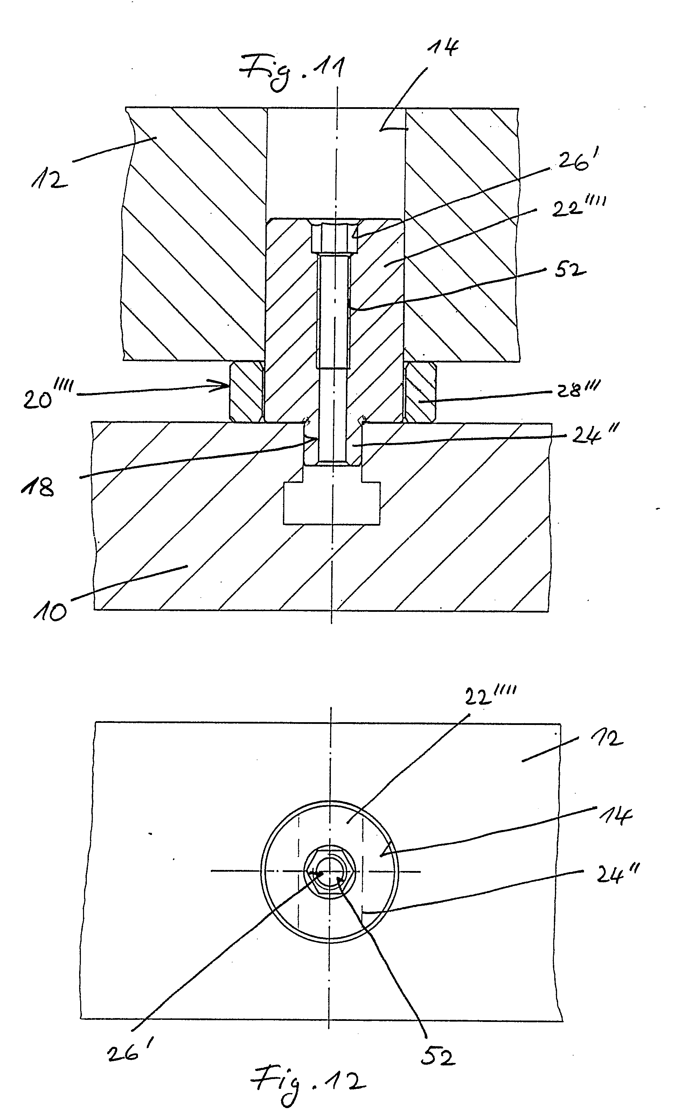

Die in den Fig. 11 und 12 dargestellte Ausführungsform wird besonders bevorzugt. Sie unterscheidet sich von der in den Fig. 3 und 4 dargestellten Ausführungsform im wesentlichen dadurch, daß der Zylinderteil 22'''' dieser Ausführungsform des Ausrichtsegments 20'''' mit dem in die Nut 18 gleitend eingreifenden Nutenführungsteil 24" einstückig ausgeführt ist und der zwischen Werkzeugmaschinentisch 10 und Formplatte 12 eingefügte Abstandshalter 28''' als lose auf der Außenseite des Zylinderteils 22'''' gleitender Ring ausgeführt ist. In die Oberseite des Zylinderteils 22'''' ist ebenfalls wieder eine Mehrkantöffnung 26' eingesenkt, in die zum Verdrehen des aus Zylinderteil 22'''' und Nutenführungsteil 24" bestehenden Gliedes von oben her durch die Systembohrung 14 ein nicht gezeigter Imbusschlüssel eingesetzt werden kann. Beim Verdrehen dieses Gliedes kann der ringförmige Abstandshalter 28''' unverdreht bleiben, so daß sich wesentlich geringere Reibungskräfte ergeben.

Aber auch ein Herausziehen des aus Zylinderteil 22'''' und Nutenführungsteil 24 bestehenden Gliedes nach oben aus der Systembohrung 14 läßt sich ohne weiteres ohne Abnehmen der schweren Formplatte 12 bewerkstelligen, da bei dieser Ausführungsform sich an die Mehrkantöffnung 26' nach unten eine Gewindebohrung 52 anschließt, in die von oben her das mit einem Außengewinde versehene Ende eines nicht dargestellten Zugwerkzeugs eingeschraubt werden kann. Nach dem Einschrauben des Zugwerkzeugs in die Gewindebohrung 52 läßt sich das aus Zylinderteil 22'''' und Nutenführungsteil 24" bestehende Glied jederzeit nach oben herausziehen, wobei der ringförmige Abstandshalter 28''' zwischen Werkzeugmaschinentisch 10 und Formplatte 12 verbleibt.

Wenn andererseits kein Abstand zwischen Werkzeugmaschinentisch 10 und Formplatte 12 erforderlich ist, kann der Abstandshalter 28''' bei dieser Ausführungsform ganz weggelassen werden, wodurch sich eine ähnliche Ausführungsform wie bei Fig. 1 ergibt.

## Ansprüche

1. Verfahren zum Ausrichten eines Maschinenteils auf einem Nuten aufweisenden Werkzeugmaschinentisch mit Hilfe von Ausrichtsegmenten, dadurch gekennzeichnet, daß zum Ausrichten einer genormte Systembohrungen (14, 16) aufweisenden Formplatte (12) für Normalien mindestens zwei Ausrichtsegmente (20, 20', 20", 20''', 20'''') verwendet werden, die mit je einem genau in den Umfang einer Systembohrung (14, 16) der Formplatte (12) passenden Zylinderteil (22, 22', 22", 22''', 22'''') in eine Systembohrung und mit je einem vom Zylinderteil axial abstehenden Nutenführungsteil (24, 24', 24") in eine Nut (18, 18') des Werkzeugmaschinentisches (10) eingesetzt werden.

2. Ausrichtsegment zur Durchführung des Verfahrens nach Anspruch 1, mit einem Zylinderteil und einem Nutenführungsteil, dadurch gekennzeichnet, daß der Zylinderteil (22, 22', 22", 22''', 22'''') mit seinem Umfang genau in eine Systembohrung (14, 16) der Formplatte (12) paßt und an seinem dem Nutenführungsteil (24, 24', 24") entgegengesetzten Ende eine Mehrkantöffnung (26, 26') zum Einsetzen eines Imbusschlüssels aufweist.

3. Ausrichtsegment nach Anspruch 2, dadurch gekennzeichnet, daß die Höhe des in die Systembohrung (14, 16) eingesetzten Abschnitts des Zylinderteils (22, 22', 22", 22''', 22'''') geringer ist, als die Dicke der Formplatte (12).

4. Ausrichtsegment nach Anspruch 2 oder 3, dadurch gekennzeichnet, daß der Zylinderteil (22'''') anschließend an die Mehrkantöffnung (26')

eine Gewindebohrung (52) zum Einsetzen eines ein Außengewinde aufweisenden Zugwerkzeugs enthält.

5. Ausrichtsegment nach einem der Ansprüche 2 bis 4, dadurch gekennzeichnet, daß es einen zwischen Formplatte (12) und Werkzeugmaschinentisch (10) einfügbaren zylindrischen Abstandshalter (28, 28', 28", 28''') aufweist, dessen Durchmesser größer ist als der Durchmesser des Zylinderteils.

6. Ausrichtsegment nach Anspruch 5, dadurch gekennzeichnet, daß der Abstandshalter (28''') als den Zylinderteil (22'''') lose umfassender Ring ausgebildet ist.

7. Ausrichtsegment nach Anspruch 5 oder 6, dadurch gekennzeichnet, daß es nur aus Zylinderteil (22, 22', 22", 22''', 22'''') und Abstandshalter (28, 28', 28") ohne Nutenführungsteil (24, 24', 24") besteht.

8. Ausrichtsegment nach einem der Ansprüche 2 bis 7, dadurch gekennzeichnet, daß der Nutenführungsteil (24') auswechselbar im Zylinderteil bzw. im Abstandshalter (28, 28") befestigt ist.

9. Ausrichtsegment nach Anspruch 8, dadurch gekennzeichnet, daß der Nutenführungsteil (24') einen zylindrischen Einsetzteil (36) aufweist, der in eine Ausnehmung (34, 34') des Zylinderteils bzw. des Abstandshalters (28, 28") einsetzbar ist.

10. Ausrichtsegment nach Anspruch 9, dadurch gekennzeichnet, daß die Achse (48) der Ausnehmung (34') exzentrisch zur Achse (50) des Zylinderteils (22''') angeordnet ist.

Fig. 1

0 263 476

U.Z.: 1607.2EP

Fig. 2

0 263 476

U.Z.: 1607.2 EP

0 263 476

Fig. 3

Fig. 4

U.Z.: 1607.2 EP

Fig. 5

36

24'

Fig. 6

24'

46

36

Fig. 7

20"

22"

28'

Fig. 8

28'

22"

30'

20"

Fig. 9

50

22'''

20'''

28"

34'

48

Fig. 10

22'''

20'''

42

26

28"

34'

0 263 476

U.Z.: 1607.2 EP

Fig. 11

14

12

26'

22""''

52

20"''''

28'''

24"

18

10

22""''

12

14

24"

26'

52

Fig. 12